# EUROPEAN PATENT APPLICATION

(11) **EP 4 693 616 A1**
(43) Date of publication of application: **11.02.2026**
(21) Application number: 24889051.9
(22) Date of filing: 04.11.2024
(51) Int. Cl.: H01M 10/617, H01M 10/658, H01M 10/653, H01M 10/655

(54) **BATTERY PACK**

(30) Priority: 06.11.2023 KR 20230151370; 23.10.2024 KR 20240145393
(71) Applicant: LG Energy Solution, Ltd., Seoul 07335 (KR)
(72) Inventor: SHIN, Ju Hwan, Daejeon 34122 (KR); NAM, Jin Moo, Daejeon 34122 (KR); KIM, Ki Young, Daejeon 34122 (KR); HAN, Nyeon Gu, Daejeon 34122 (KR)
(74) Representative: Plasseraud IP
(86) International application number: PCT/KR2024/017119
(87) International publication number: WO 2025/100863

(57) **Abstract**

Example embodiments provide a battery pack. The battery pack includes a pack housing with a base plate, first and second battery cell assemblies on the base plate, and blocks between the first and second battery cell assemblies and the base plate, in which the blocks overlap outermost battery cells of the first and second battery cell assemblies.

## Description

### [Technical Field]

The present invention relates to a battery pack. The present application claims the benefit of priority based on Korean Patent Application No. 10-2023-0151370, filed on November 6, 2023 and Korean Patent Application No. 10-2024-0145393, filed on October 23, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack with improved safety.

### [Technical Solution]

Example embodiments of the present invention provide a battery pack. The battery pack includes a pack housing with a base plate, first and second battery cell assemblies on the base plate, and blocks between the first and second battery cell assemblies and the base plate, each of the first and second battery cell assemblies includes a pair of outermost battery cells, a plurality of intermediate battery cells between the pair of outermost battery cells, and insulation pads spaced apart from each other with the pair of outermost battery cells between the insulation pads, and the blocks overlap the outermost battery cells of the first and second battery cell assemblies.

The battery pack may further include thermal interface material (TIM) layers overlapping the plurality of intermediate battery cells of the first and second battery cell assemblies and provided between the first and second battery cell assemblies and the base plate.

The outermost battery cells may be spaced apart from each of the TIM layers.

The blocks may be in contact with a corresponding one of the outermost battery cells of the first and second battery cell assemblies.

The TIM layers may be in contact with the plurality of intermediate battery cells of the first and second battery cell assemblies.

The blocks may horizontally surround the TIM layers and be in contact with the TIM layers.

Thermal conductivity of each of the blocks may be different from thermal conductivity of each of the TIM layers.

Thermal conductivity of each of the blocks may be lower than thermal conductivity of each of the TIM layers.

Example embodiments provide a battery pack. The battery pack includes a base plate, a battery cell assembly on the base plate, a block between the base plate and the battery cell assembly, and a TIM layer between the base plate and the battery cell assembly, the battery cell assembly includes outermost battery cells and a plurality of intermediate battery cells between the outermost battery cells, and each of the outermost battery cells is spaced apart from the TIM layer.

The block may be in contact with the outermost battery cells of the battery cell assembly.

The TIM layer may be in contact with the plurality of intermediate battery cells of the battery cell assembly.

Thermal conductivity of the block may be lower than thermal conductivity of the TIM layer.

The block may horizontally surround the TIM layer.

The outermost battery cells may be spaced apart from each other in a first direction and be spaced apart from the TIM layer in the first direction.

The battery pack may further include a tape between the TIM layer and the base plate.

The TIM layer may be spaced apart from the base plate.

The tape may protrude with respect to the battery cell assembly in a first direction parallel to a mounting surface of the base plate.

The tape may protrude with respect to the TIM layer in the first direction.

The tape may include a portion between the block and the battery cell assembly.

### [Advantageous Effects]

According to example embodiments of the present invention, a temperature deviation between a plurality of battery cells in a battery cell assembly of a battery pack can be reduced, thereby increasing the lifespan and reliability of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a flowchart of a manufacturing method of a battery pack according to example embodiments.
FIGS. 2 to 9 are diagrams for describing a manufacturing method of a battery pack according to example embodiments.
FIGS. 10 to 12 are cross-sectional views for describing a battery pack according to other example embodiments.
FIG. 13 is a plan view for describing a battery pack according to other example embodiments.
FIG. 14 is a cross-sectional view taken along line 13I-13I' of FIG. 13.
FIG. 15 is a cross-sectional view taken along line 13II-13II' of FIG. 13.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

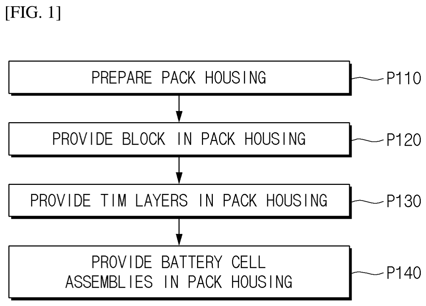

FIG. 1 is a flowchart of a manufacturing method of a battery pack according to example embodiments.

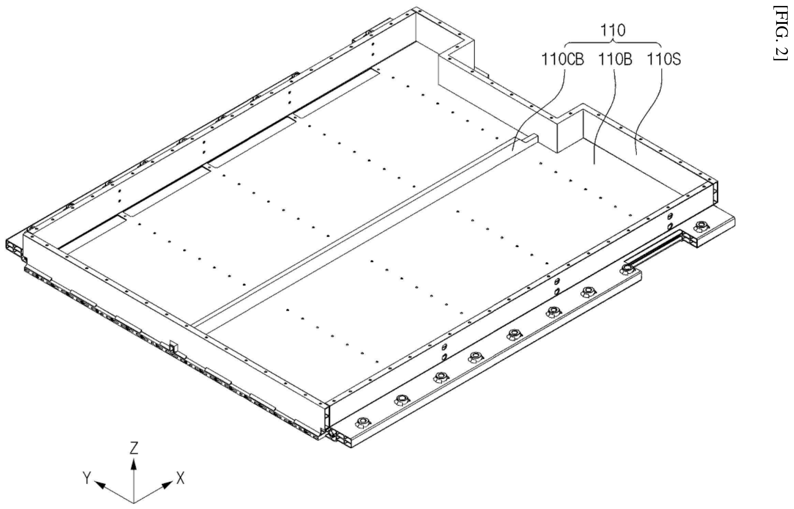

FIG. 2 is a perspective view for describing a manufacturing method of a battery pack.

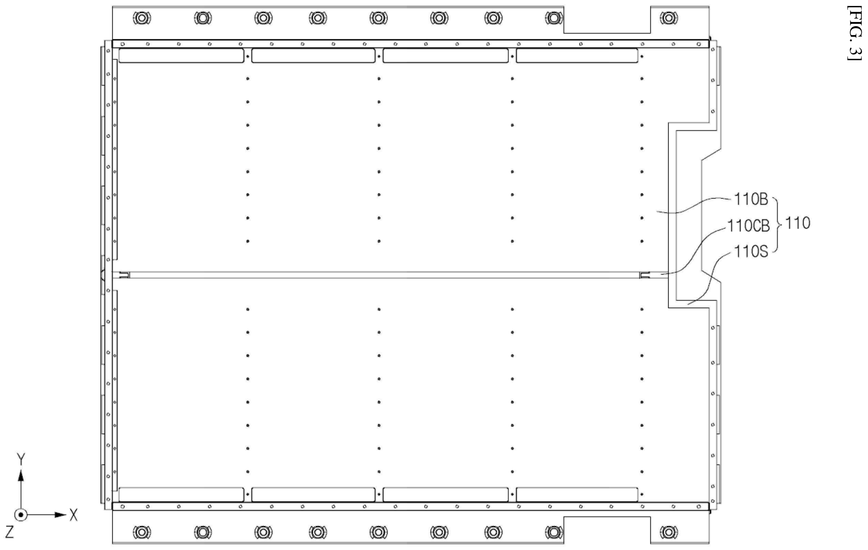

FIG. 3 is a plan view of FIG. 2.

Referring to FIGS. 1 to 3, in P110, a pack housing 110 may be prepared. The pack housing 110 may include a base plate 110B and side walls 110S.

Here, two directions substantially parallel to a mounting surface of the base plate 110B are defined as an X-axis direction and a Y-axis direction, and a direction substantially perpendicular to the mounting surface of the base plate 110B is defined as a Z-axis direction. The X-axis direction, the Y-axis direction, and the Z-axis direction may be substantially perpendicular to one another.

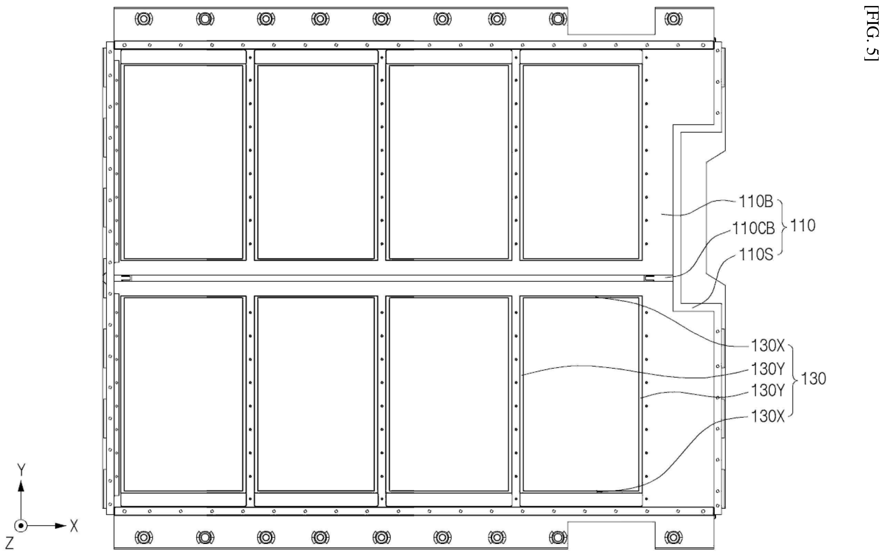

The side walls 110S may be adjacent to edges of the base plate 110B. The side walls 110S may be coupled to the edges of the base plate 110B. Accordingly, the side walls 110S may horizontally surround the mounting surface of the base plate 110B on which battery cell assemblies 120 (see FIG. 5) are mounted.

The base plate 110B may include a center beam 110CB. The center beam 110CB may be surrounded by the side walls 110S. Accordingly, the center beam 110CB may partition a space defined by the pack housing 110.

Each of the base plate 110B and the side walls 110S may be provided by an extrusion process. The base plate 110B may include a plurality of plates coupled to each other by friction stir welding. The center beam 110CB may be included in one of a plurality of plates of the base plate 110B, formed by the extrusion process, together with one of the plurality of plates of the base plate 110B, or welded to one of the plurality of plates of the base plate 110B.

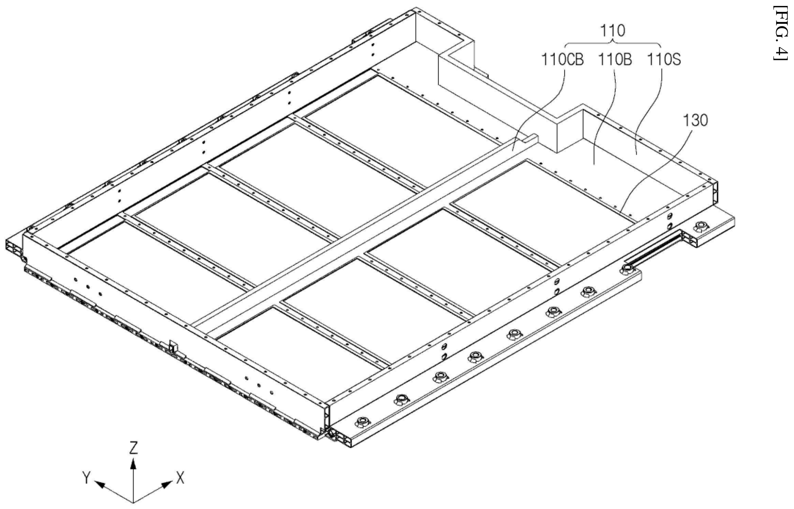

FIG. 4 is a perspective view for describing a manufacturing method of a battery pack.

FIG. 5 is a plan view of FIG. 4.

Next, referring to FIGS. 1, 4, and 5, in P120, blocks 130 may be provided in the pack housing 110. The blocks 130 may be provided on the base plate 111B of the pack housing 110. The blocks 130 may define positions at which the plurality of battery cell assemblies 120 of FIG. 5 are mounted. Each of the blocks 130 may include a resin such as polyurethane but is not limited thereto.

Each of the blocks 130 may include rods 130X and rods 130Y. The rods 130X and the rods 130Y of each of the blocks 130 may be arranged to form a hollow square. The rods 130X may be substantially parallel to the X-axis direction. The rods 130Y may be substantially parallel to the Y-axis direction. A width of each of the rods 130X (i.e., a width thereof in the Y-axis direction) may be different from a width of each of the rods 130Y (i.e., a width thereof in the X-axis direction). The width of each of the rods 130X (i.e., the width thereof in the Y-axis direction) may be greater than the width of each of the rods 130Y (i.e., the width thereof in the X-axis direction).

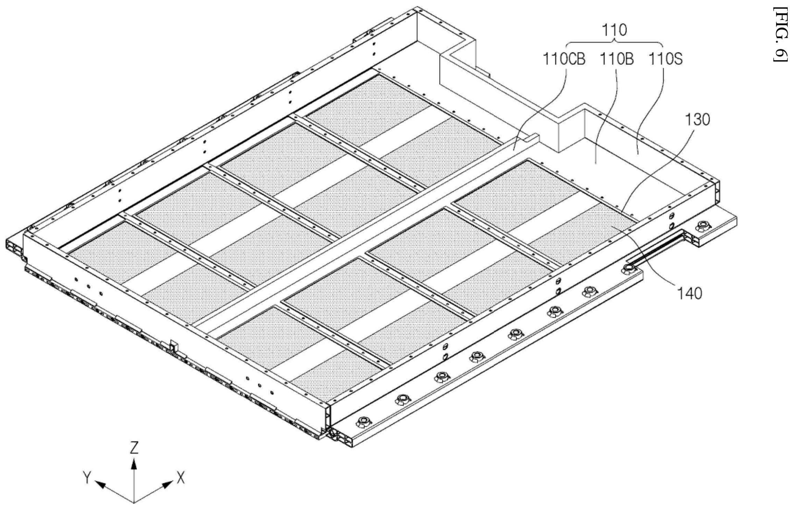

FIG. 6 is a perspective view for describing a manufacturing method of a battery pack.

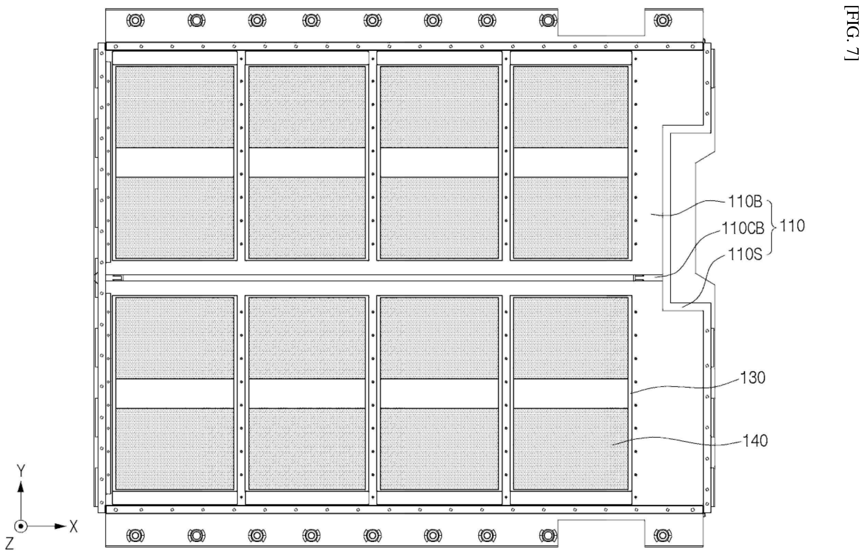

FIG. 7 is a plan view of FIG. 6.

Next, referring to FIGS. 1, 6 and 7, in P130, a thermal interface material (TIM) layers 140 may be provided in the pack housing 110. The TIM layers 140 may be provided on the base plate 111B of the pack housing 110. The TIM layers 140 may include a resin composition. The TIM layers 140 may be provided by a thermal resin application process.

The resin composition may be a room-temperature curable composition. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicone resin, a polyol resin, an epoxy resin, or an acrylic resin.

A curing agent of the resin composition may be selected according to a major component of the resin composition. For example, the curing agent may be a siloxane compound when the major component of the resin composition is a silicone resin, may be an isocyanate compound when the major component of the resin composition is a polyol resin, may be an amine compound when the major component of the resin composition is an epoxy resin, and may be an isocyanate compound when the major component of the resin composition is an acrylic resin.

An inorganic filler of the resin composition may have relatively high thermal conductivity. According to example embodiments, the thermal conductivity of the inorganic filler of the resin composition may be about 1 W/mK or more. According to example embodiments, the thermal conductivity of the inorganic filler of the resin composition may be about 5 W/mK or more. According to example embodiments, the thermal conductivity of the inorganic filler of the resin composition may be about 10 W/mK or more. According to example embodiments, the thermal conductivity of the inorganic filler of the resin composition may be about 15 W/mK or more.

According to example embodiments, the inorganic filler of the resin composition may include ceramic. For example, the inorganic filler of the resin composition may include aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), or boehmite. The resin composition may include a carbon filler. The resin composition may include, for example, fumed silica, clay, or calcium carbonate.

The blocks 130 may horizontally surround the TIM layers 140 (i.e., in the X-axis direction and the Y-axis direction). The blocks 130 may be at the same level as the TIM layers 140 in the Z-axis direction. The TIM layers 140 may be in contact with the blocks 130. The blocks 130 may define the TIM layers 140 horizontally (i.e., in the X-axis direction and the Y-axis direction). Before the TIM layers 140 are cured, the TIM layers 140 may flow due to, for example, pressure by the battery cell assemblies 120 of FIG. 5 or an external force such as external vibration. The blocks 130 may prevent the TIM layers 140 from flowing to an undesired part of the base plate 110B.

The blocks 130 may include a material different from that of the TIM layers 140. The thermal conductivity of each of the blocks 130 may be different from the thermal conductivity of each of the TIM layers 140. The thermal conductivity of each of the blocks 130 may be lower than the thermal conductivity of each of the TIM layers 140. Each of the blocks 130 may include poly-urethane (PU) or silicon.

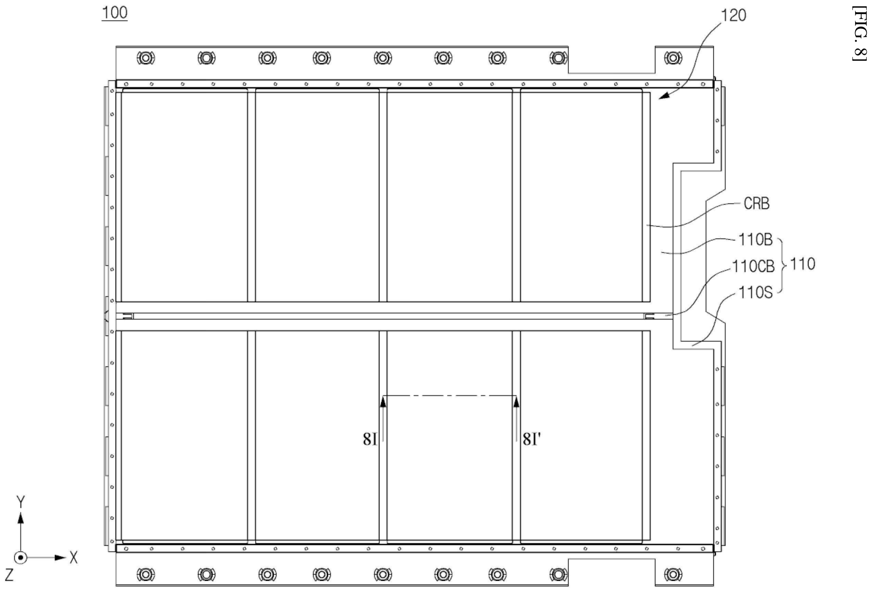

FIG. 8 is a plan view of a battery pack 100 according to example embodiments.

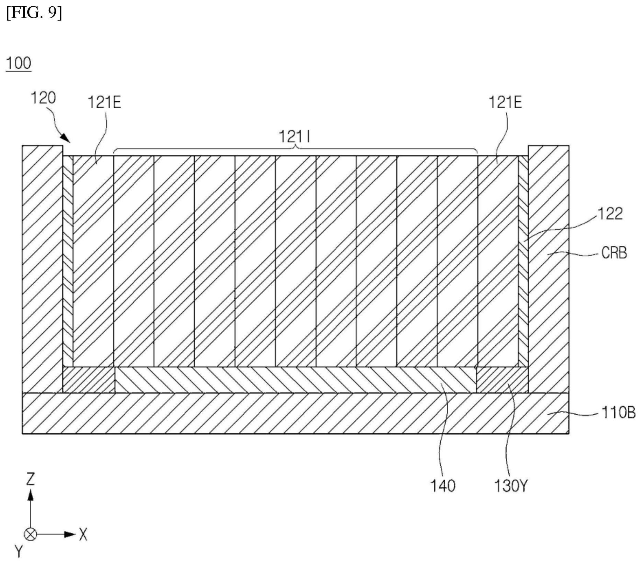

FIG. 9 is a cross-sectional view taken along line 8I-8I' of FIG. 8.

Next, referring to FIGS. 1, 8 and 9, in P140, the plurality of battery cell assemblies 120 may be provided in the pack housing 110.

The plurality of battery cell assemblies 120 may be on the base plate 110B of the pack housing 110. Accordingly, the battery pack 100 may be provided. The battery pack 100 may be a final product to be mounted in an application such as a vehicle. The battery pack 100 may include the pack housing 110, the plurality of battery cell assemblies 120, the blocks 130, and the TIM layers 140.

The base plate 110B may support the plurality of battery cell assemblies 120. The side walls 110S may horizontally surround the plurality of battery cell assemblies 120. The side walls 110S may protect the plurality of battery cell assemblies 120. The plurality of battery cell assemblies 120 may overlap the blocks 130 and the TIM layers 140 in the Z-axis direction.

For example, the battery pack 100 may be a moduleless type battery pack, and each of the plurality of battery cell assemblies 120 may not include a module frame. Accordingly, outermost battery cells 121E and intermediate battery cells 121I of the plurality of battery cell assemblies 120 may be in contact with one of the blocks 130 and the TIM layers 140.

Each of the plurality of battery cell assemblies 120 may include outermost battery cells 121E, intermediate battery cells 1211, and insulation pads 122.

The outermost battery cells 121E and the intermediate battery cells 121I may form a plurality of banks connected to each other in series. The outermost battery cells 121E and the intermediate battery cells 121I included in each of the plurality of banks may be connected in parallel. The number of banks connected in series and the numbers of outermost battery cells 121E and intermediate battery cells 121I connected in parallel may be determined according to a voltage and a current to be output from each of the battery cell assemblies 120.

Here, the outermost battery cells 121E and the intermediate battery cells 121I are basic units of a lithium ion battery, i.e., a secondary battery. Each of the outermost battery cells 121E and the intermediate battery cells 121I includes an electrode assembly, an electrolyte, and a case. Each of the outermost battery cells 121E and the intermediate battery cells 121I may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The outermost battery cells 121E may be arranged on opposite ends of the plurality of battery cell assemblies 120 in the X-axis direction. The intermediate battery cells 121I may be interposed between the outermost battery cells 121E. The outermost battery cells 121E may be spaced apart from each other in the X-axis direction with the plurality of battery cell assemblies 120 interposed therebetween.

The insulation pads 122 may be spaced apart from each other in the X-axis direction with the outermost battery cells 121E and the intermediate battery cells 121I interposed therebetween. The insulation pads 122 may be interposed between the outermost battery cells 121E and cross beams CRB. The outermost battery cells 121E may be in contact with the insulation pads 122. The outermost battery cells 121E may be spaced apart from the cross beams CRB with the insulation pads 122 interposed therebetween.

Each of the insulation pads 122 may have low thermal conductivity. According to example embodiments, the thermal conductivity of each of the insulation pads 122 may be about 20 W/mK or less. According to example embodiments, the thermal conductivity of each of the insulation pads 122 may be about 1 W/mK or less. According to example embodiments, the thermal conductivity of each of the insulation pads 122 may be about 0.5 W/mK or less. According to example embodiments, the thermal conductivity of each of the insulation pads 122 may be about 0.1 W/mK or less. According to example embodiments, the thermal conductivity of each of the insulation pads 122 may be about 0.05 W/mK or less. According to example embodiments, the thermal conductivity of each of the insulation pads 122 may be about 0.04 W/mK or less. According to example embodiments, the thermal conductivity of each of the insulation pads 122 may be about 0.03 W/mK or less. The thermal conductivity of each of the insulation pads 122 described above may be measured at room temperature (about 25 °C).

Each of the insulation pads 122 may include aerogel. Aerogel is a solid material that is very light and has a porous structure. Aerogel may include silica, carbon, aluminum oxide, or the like.

Each of the insulation pads 122 may have a high melting point and/or a high ignition point. According to example embodiments, the melting point and/or the ignition point of each of the insulation pads 122 may be about 300 °C or higher. According to example embodiments, the melting point and/or the ignition point of each of the insulation pads 122 may be about 500 °C or higher.

Each of the outermost battery cells 121E may overlap the rods 130Y of the blocks 130 of FIG. 5 in the Z-axis direction. Each of the outermost battery cells 121E may be in contact with the rods 130Y of the blocks 130 of FIG. 5. The rods 130Y of the blocks 130 of FIG. 5 may be in contact with a corresponding one of the outermost battery cells 121E of the first and second battery cell assemblies 120. Each of the outermost battery cells 121E may not overlap the TIM layers 140 in the Z-axis direction. Each of the outermost battery cells 121E may not be in contact with the TIM layers 140. Each of the outermost battery cells 121E may be spaced apart from the TIM layers 140. Each of the outermost battery cells 121E may be spaced apart from the TIM layers 140 in the X-axis direction.

Each of the intermediate battery cells 121I may not overlap the rods 130Y of the blocks 130 of FIG. 5 in the Z-axis direction. Each of the intermediate battery cells 121I may not be in contact with the rods 130Y of the blocks 130 of FIG. 5. Each of the intermediate battery cells 121I may be spaced apart from the rods 130Y of the blocks 130 of FIG. 5. Each of the intermediate battery cells 121I may overlap the TIM layers 140 in the Z-axis direction. Each of the outermost battery cells 121E may be in contact with the TIM layers 140.

According to example embodiments, each of the intermediate battery cells 121I may be in contact with two battery cells, and the outermost battery cells 121E may be in contact with one battery cell. Accordingly, when cooling conditions of the intermediate battery cells 121I and the outermost battery cells 121E are the same, a temperature deviation may occur between the intermediate battery cells 121I and the outermost battery cells 121E.

According to example embodiments, one side of each of the outermost battery cells 121E may be covered with the insulation pads 122 and a lower part of each of the outermost battery cells 121E may be covered with the rods 130Y of the blocks 130 of FIG. 5 to mitigate or remove a temperature deviation between the intermediate battery cells 121I and the outermost battery cells 121E, thereby improving the reliability and lifespan of the battery pack 100.

According to example embodiments, a width of each of the rods 130Y (i.e., a width thereof in the X-axis direction) may be greater than a width of each of the outermost battery cells 121E. According to example embodiments, the width of each of the rods 130Y (i.e., the width thereof in the X-axis direction) may be substantially the same as the sum of a width of each of the outermost battery cells 121E (i.e., the width thereof in the X-axis direction) and a width of each of the insulation pads 122 (i.e., the width thereof in the X-axis direction).

The center beam 110CB may be interposed between the plurality of battery cell assemblies 120. The center beam 110CB may isolate the plurality of battery cell assemblies 120 in the Y-axis direction. The cross beams CRB extending in the Y-axis direction may be interposed between the plurality of battery cell assemblies 120. The cross beams CRB may be included in the plurality of battery cells 120, or may be coupled (e.g., welded) to the base plate 110B.

In FIG. 1, an array of the plurality of battery cell assemblies 120 may be a 4x2 array. Technicians of ordinary skill in the art will be able to easily derive the plurality of battery cell assemblies 120 arranged in an MxN array (here, M and N are each an integer of 2 or more), based on the above description.

An arrangement of the center beam 110CB and the plurality of battery cell assemblies 120 shown in FIG. 1 is a non-limiting example and should not be understood as limiting the technical idea of the present invention in any sense. A battery pack that includes various numbers and arrangements of a center beam, cross beams, and battery cell assemblies will be easily derived by technicians of ordinary skill in the art based on the above description.

The battery pack 100 may further include exhaust devices coupled to one of the side walls 110S. One of the side walls 110S may include exhaust holes connected to exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event occurring in the plurality of battery cell assemblies 120 is a state in which a change of temperature of the plurality of battery cell assemblies 120 accelerates the change of temperature, i.e., uncontrollable positive feedback. The temperature of the plurality of battery cell assemblies 120 that are in a thermal runaway state sharply increases, and a large amount of a high-pressure gas and combustion debris are discharged.

The battery pack 100 may further include a battery management system (BMS). The BMS may be configured to monitor, balance, and control the battery pack 100. The monitoring of the battery pack 100 may include measuring voltages and currents of certain nodes inside the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The battery pack 100 may further include a lead plate coupled to the side walls 110S. The lead plate may cover elements, such as the battery cell assemblies 120 and electronic components, in the battery pack 100. The lid plate may be fixed to the battery pack 100 by a mechanical coupling means, e.g., a bolt.

### (Third Embodiment)

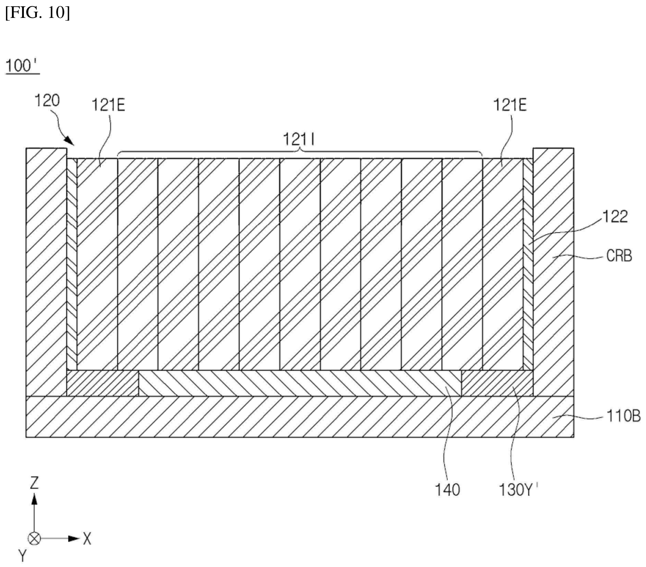

FIG. 10 is a cross-sectional view for describing a battery pack 100' according to other example embodiments.

Referring to FIG. 10, the battery pack 100' may include the pack housing 110 of FIG. 2, a plurality of battery cell assemblies 120, the blocks 130 of FIG. 5, and TIM layers 140.

The pack housing 110 of FIG. 2, the plurality of battery cell assemblies 120, and the TIM layers 140 are substantially the same as those described above with reference to FIGS. 8 and 9 and thus redundant description thereof is omitted here.

Each of rods 130Y' of the blocks 130 of FIG. 5 may have a width (e.g., a width in the X-axis direction) greater than that in an example of FIG. 9. According to example embodiments, the width of each of the rods 130Y' (e.g., the width thereof in the X-axis direction) may be greater than a width of each of outermost battery cells 121E. According to example embodiments, the width of each of the rods 130Y' (e.g., the width thereof in the X-axis direction) may be greater than the sum of the width of each of the outermost battery cells 121E (i.e., the width thereof in the X-axis direction) and a width of each of insulation pads 122 (e.g., the width thereof in the X-axis direction). Accordingly, each of the rods 130Y' may overlap some of intermediate battery cells 121I in the Z-axis direction. Each of the rods 130Y' may overlap some of the intermediate battery cells 121I.

### (Fourth Embodiment)

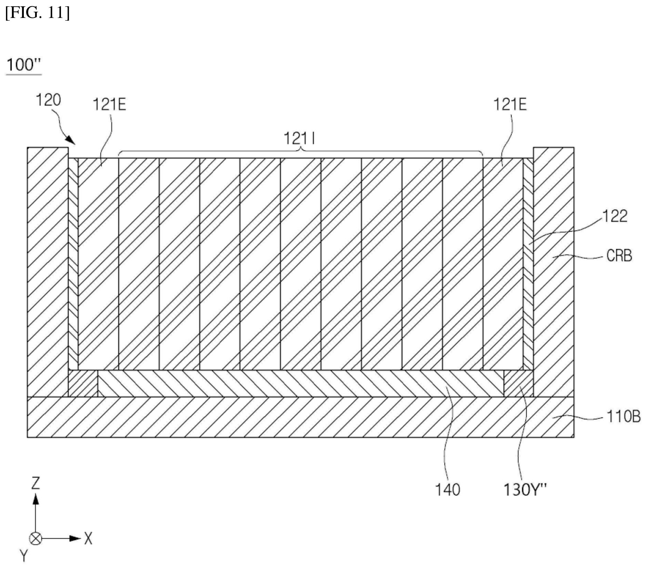

FIG. 11 is a cross-sectional view for describing a battery pack 100" according to other example embodiments.

Referring to FIG. 11, the battery pack 100" may include the pack housing 110 of FIG. 2, a plurality of battery cell assemblies 120, the blocks 130 of FIG. 5, and TIM layers 140.

The pack housing 110 of FIG. 2, the plurality of battery cell assemblies 120, and the TIM layers 140 are substantially the same as those described above with reference to FIGS. 8 and 9 and thus redundant description thereof is omitted here.

Each of rods 130Y' of the blocks 130 of FIG. 5 may have a width (e.g., a width in the X-axis direction) less than that in the example of FIG. 9. According to example embodiments, the width of each of the rods 130Y' (e.g., the width thereof in the X-axis direction) may be less than the sum of a width of each of outermost battery cells 121E (i.e., a width thereof in the X-axis direction) and a width of each of insulation pads 122 (e.g., a width thereof in the X-axis direction). Accordingly, each of the TIM layers 140 may overlap some of the outermost battery cell 121E in the Z-axis direction. Each of the TIM layers 140 may be in contact with some of the outermost battery cells 121E.

The outermost battery cells 121E may be partially in contact with the TIM layers 140. A rate of portions of lower surfaces of the outermost battery cells 121E in contact with the TIM layers 140 (i.e., surfaces of the outermost battery cells 121E facing a base plate 110B) may be determined based on a temperature deviation performance test conducted on the battery cell assembly 120.

### (Fifth Embodiment)

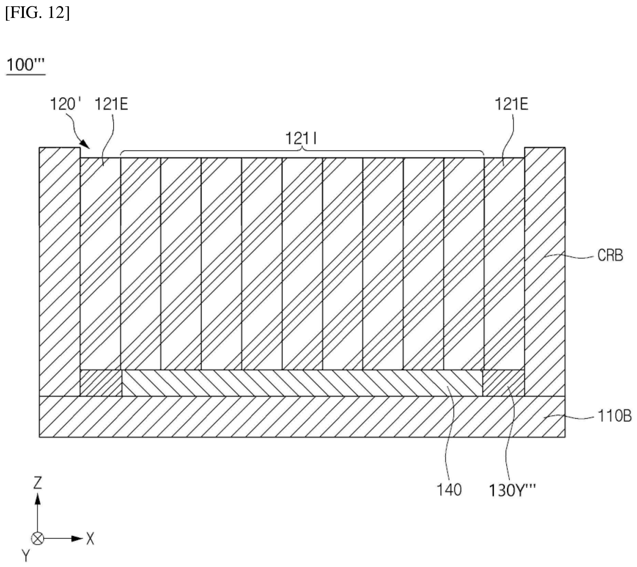

FIG. 12 is a cross-sectional view for describing a battery pack 100‴ according to other example embodiments.

The battery pack 100'" may include the pack housing 110 of FIG. 2, a plurality of battery cell assemblies 120', the blocks 130 of FIG. 5, and TIM layers 140.

The pack housing 110 of FIG. 2 and the TIM layers 140 are substantially the same as those described above with reference to FIGS. 8 and 9 and thus redundant description thereof is omitted here.

Referring to FIG. 12, each of multiple battery cell assemblies 120 may include outermost battery cells 121E and intermediate battery cells 121I. That is, each of the plurality of battery cell assemblies 120 may not include insulation pads between the outermost battery cells 121E and cross beams CRB.

According to example embodiments, a width of each of rods 130Y‴ of the blocks 130 of FIG. 5 (e.g., a width thereof in the X-axis direction) may be substantially the same as a width of each of the outermost battery cells 121E (e.g., a width thereof in the X-axis direction).

### (Sixth Embodiment)

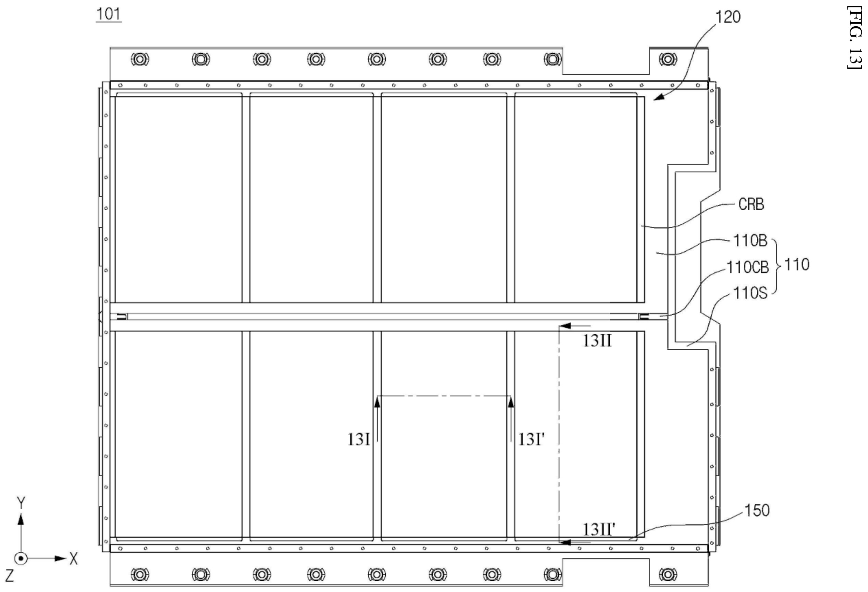

FIG. 13 is a plan view for describing a battery pack 101 according to other example embodiments.

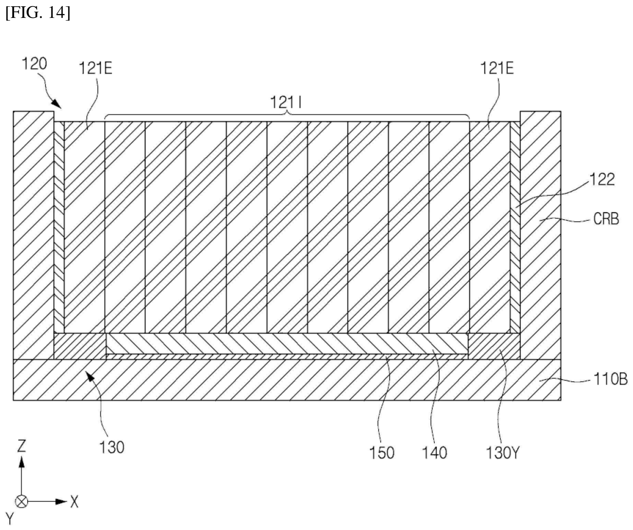

FIG. 14 is a cross-sectional view taken along line 13I-13I' of FIG. 13.

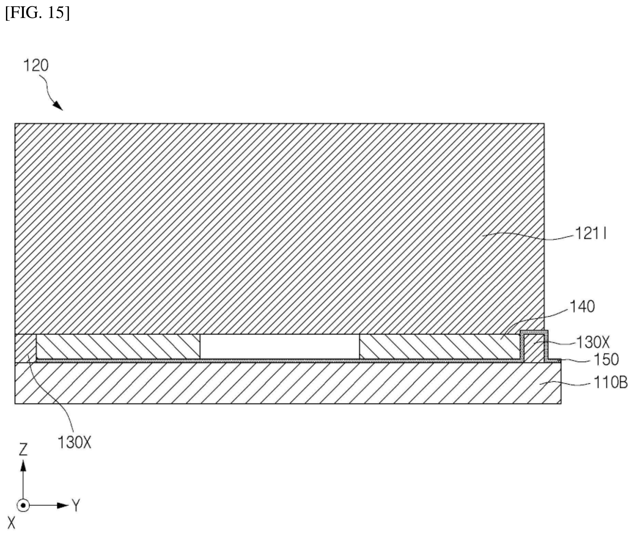

FIG. 15 is a cross-sectional view taken along line 13II-13II' of FIG. 13.

Referring to FIGS. 13 to 15, the battery pack 101 may include a pack housing 110, a plurality of battery cell assemblies 120, blocks 130, TIM layers 140, and tapes 150.

The pack housing 110, the plurality of battery cell assemblies 120, the blocks 130, and the TIM layers 140 are substantially the same as those described above with reference to FIGS. 8 and 9 and thus redundant description thereof is omitted herein.

Referring to FIG. 13, the tapes 150 may be interposed between the plurality of battery cell assemblies 120 and a base plate 110B. The tapes 150 may be interposed between the TIM layers 140 and the base plate 110B.

Each of the tapes 150 may be in contact with a corresponding one of the TIM layers 140 and the base plate 110B. The tapes 150 may cover the base plate 110B and thus each of the TIM layers 140 may not be in contact with the base plate 110B. Each of the TIM layers 140 may be spaced apart from the base plate 110B.

The plurality of battery cell assemblies 120 may partially cover the tapes 150. The plurality of battery cell assemblies 120 may expose portions of the tapes 150. The tapes 150 may protrude with respect to the plurality of battery cell assemblies 120 in the Y-axis direction. In the Y-axis direction, the tapes 150 may include portions between the plurality of battery cell assemblies 120 and side walls 110S.

The TIM layers 140 may partially cover the tapes 150. The TIM layers 140 may partially expose portions of the tapes 150. The tapes 150 may protrude with respect to the TIM layers 140 in the Y-axis direction. In the Y-axis direction, the tapes 150 may include portions between the TIM layers 140 and the side walls 110S.

The tapes 150 may include portions between a corresponding one of the blocks 130 and a corresponding one of the plurality of battery cell assemblies 120 in the Z-axis direction. The tapes 150 may include portions between rods 130X of the corresponding one of the blocks 130 and the corresponding one of the plurality of battery cell assemblies 120 in the Z-axis direction.

Accordingly, in the pack housing 110, when some of the plurality of battery cell assemblies 120 fixed by the TIM layers 140 are defective, corresponding TIM layers 140 may be removed by pulling corresponding tapes 150, thus allowing the defective battery cell assemblies 120 to be repaired, removed, or replaced with others.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing including a base plate;
first and second battery cell assemblies on the base plate; and
blocks between the first and second battery cell assemblies and the base plate,
wherein each of the first and second battery cell assemblies includes a pair of outermost battery cells, a plurality of intermediate battery cells between the pair of outermost battery cells, and insulation pads spaced apart from each other with the pair of outermost battery cells between the insulation pads, and
the blocks overlap the outermost battery cells of the first and second battery cell assemblies.

2. The battery pack of claim 1, further comprising thermal interface material (TIM) layers overlapping the plurality of intermediate battery cells of the first and second battery cell assemblies and provided between the first and second battery cell assemblies and the base plate.

3. The battery pack of claim 2, wherein the outermost battery cells are spaced apart from each of the TIM layers.

4. The battery pack of claim 2, wherein the blocks are in contact with a corresponding one of the outermost battery cells of the first and second battery cell assemblies.

5. The battery pack of claim 2, wherein the TIM layers are in contact with the plurality of intermediate battery cells of the first and second battery cell assemblies.

6. The battery pack of claim 2, wherein the blocks horizontally surround the TIM layers and are in contact with the TIM layers.

7. The battery pack of claim 2, wherein thermal conductivity of each of the blocks is different from thermal conductivity of each of the TIM layers.

8. The battery pack of claim 2, wherein thermal conductivity of each of the blocks is lower than thermal conductivity of each of the TIM layers.

9. A battery pack comprising:
a base plate;
a battery cell assembly on the base plate;
a block between the base plate and the battery cell assembly; and
a thermal interface material (TIM) layer between the base plate and the battery cell assembly,
wherein the battery cell assembly includes outermost battery cells and a plurality of intermediate battery cells between the outermost battery cells, and
each of the outermost battery cells is spaced apart from the TIM layer.

10. The battery pack of claim 9, wherein the block is in contact with the outermost battery cells of the battery cell assembly.

11. The battery pack of claim 9, wherein the TIM layer is in contact with the intermediate battery cells of the battery cell assembly.

12. The battery pack of claim 9, wherein thermal conductivity of the block is lower than thermal conductivity of the TIM layer.

13. The battery pack of claim 9, wherein the block horizontally surrounds the TIM layer.

14. The battery pack of claim 9, wherein the outermost battery cells are spaced apart from each other in a first direction, and
the outermost battery cells are spaced apart from the TIM layer in the first direction.

15. The battery pack of claim 9, further comprising a tape between the TIM layer and the base plate.

16. The battery pack of claim 15, wherein the TIM layer is spaced apart from the base plate.

17. The battery pack of claim 15, wherein the tape protrudes with respect to the battery cell assembly in a first direction parallel to a mounting surface of the base plate.

18. The battery pack of claim 17, wherein the tape protrudes with respect to the TIM layer in the first direction.

19. The battery pack of claim 15, wherein the tape includes a portion between the block and the battery cell assembly.
